# EUROPEAN PATENT APPLICATION

(11) **EP 3 169 034 A1**
(43) Date of publication of application: **17.05.2017**
(21) Application number: 15382553.4
(22) Date of filing: 10.11.2015
(51) Int. Cl.: H04L 29/06

(54) **METHODS, APPARATUS AND SYSTEM FOR IMPROVED ACCESS OF CONSUMER'S PERSONAL DATA**

(71) Applicant: Telefonica Digital España, S.L.U., 28013 Madrid (ES)
(72) Inventor: GONZALEZ BLANCO, Rubén, 28013 Madrid (ES); LOPEZ MIGUEL, David, 28013 Madrid (ES); MAYORAL SANTOS, Francisco, 28013 Madrid (ES); JIMENEZ TORNOS, Gerardo, 28013 Madrid (ES)
(74) Representative: Carpintero Lopez, Francisco

(57) **Abstract**

Methods, apparatus and system to access personal data of an consumer (generated when said user is operating with a first service provider) by a second service provider, maintaining the privacy of the consumer. The proposed invention allows accessing data belonging to a certain consumer (for example, data generated when using a certain telecommunications service) by another entity providing services to the user (for example a bank) without sending the personal identification of the consumer. The proposed invention adds more flexibility, saves resources and increases scalability, efficiency and privacy.

## Description

### FIELD OF THE INVENTION

The present invention relates generally to access of consumer's personal data and more specifically, it relates to a method, apparatus and a system for accessing personal data of a consumer (end user), which has been previously anonymized, without compromising his privacy and optimizing resources consumption.

### BACKGROUND OF THE INVENTION - RELATED ART

As a result of their business as usual (BAU) operations, many companies (for example telecommunications operators offering telecommunications services) generate huge amount of personal data (i.e. billing records, network traffic records) that is related to their consumers (end users) personal identifiers (i.e a mobile phone, national identity card, bank account...). For example, in the case of a mobile telecommunications operator, as their consumers perform phone calls, send SMSs, pay their phone bills, call customer centre..., they generate data sets that are associated to their consumers mobile phone number as personal identifier, like Call Detail Records (CDR), Customer Relationship Management (CRM) records, billing information, network database connectivity status, etc. Said personal data set is the result of the business as usual operation of the telecommunications services provided by the operator to their consumers (end users). This personal data set is going to be named from now on, BAU personal data set and the company that generates those BAU data sets is going to be named Data Source.

That BAU personal data set can be utilized to extract unique data insights related to consumers behaviour (i.e. credit scoring, dwell locations, health prediction, ...) but usually, the companies generating the BAU data set (Data Source companies) do not have neither the legal right (because they do not have consumer explicit consent or legal license) nor the expertise to extract personal data insights from personal datasets they generate as part of their BAU operation. In order to offer valued added services based on those BAU personal data sets, the Data Source companies may rely on third party companies (called Data Insights Suppliers, DIS) specialized in processing the BAU personal data sets to obtain added value personal information (insights). The BAU personal data sets are shared by the DS companies with said data insights suppliers (DIS) but, in order to protect consumers privacy, before sharing said information, the BAU personal data sets are made anonymous (anonymized, in other words, the personal identity corresponding to each data sets is hidden, for example, being encrypted) by any know procedure (encryption, tokening, hashing...) . Data Insights Suppliers process the anonymized BAU datasets and calculate personal data insights from them; said personal data insights remain anonymous because the BAU dataset was previously anonymized. The anonymous data insights can be utilized and monetized at different service providers (SP) (like banks, healthcare organizations or any other type of service providers) only when the consumer gives his explicit consent to access her anonymous data insight. For example, when a consumer asks for a credit to a bank and she does not have previous credit history, she can offer to the bank the possibility of querying her credit score calculated from her mobile billing records; or when an user asks for an insurance to an insurance company, the company can query to the DIS her dwell location calculated from his BAU information; or when an user asks for mental health assessment to a Health care institution, the institution can query her social score calculated from her BAU information.

Since the insights (creditscore, dwell location, social, score...) are anonymized (they were calculated from an anonymized BAU data set), the anonymization has to be reverted at service transaction time, once the consumer provides explicit consent. The consumer provides a personal identifier (e.g. mobile phone number) and grants consent at the Service Provider (i.e Bank), but the data insights supplier (the company that has calculated the Credit scores using anonymized datasets) does not know how to map the personal identifier (mobile phone number) to its anonymized counterpart. In other words, as the data insights are anonymous, the DIS does not know which insights data corresponds to the personal identifier (mobile phone number) presented by the consumer to Service Provider (Bank), so the anomyzation must be reverted at that service transaction time. There are different ways of reverting personal identifier anonymization at transaction time but, as it will be explained now, none of them are neither scalable enough or they do fully guarantee consumer (end user) personal data privacy and they imply the use of many communications resources.

Anonymization is a process that removes or replaces identity information from a data record, hiding personal identity. In other words, it is a process of either encrypting or removing personally identifiable information from data sets, so that the people whom the data describe remain anonymous. Encryption is the process of encoding messages or information in such a way that only authorized parties can read it (encryption does not of itself prevent interception, but denies the message content to the interceptor). Anonymized data allows organizations to release personal information into the public domain or third parties without compromising user privacy. Anonymization usually works by transforming personal data records using a private key (also known as SALT) and algorithm (hashing, encryption...) that make sure it is irreversible, unless the private key and the algorithm is known. Usually only the personal identity of the end user is anonymized and the rest of information is in the clear (it remains unchanged). So, for example, if the personal identity of the end user is the mobile phone and said mobile phone number is associated with personal information of the end user (as CRM, CDR, billing information...), the mobile phone is anonymized (for example, encrypted with a certain key) and the personal information of the end user is associated to said encrypted mobile phone number. In an alternative embodiment, all the information (that is not only the personal identity but also the rest of information CRM, CDR...) is anonymizedd (i.e encrypted).

As stated before, sometimes it is necessary to revert said anonymization for re-identifying the personal data. In order to protect end user pricacty when reverting the anonymization, the anonymization algorithms and the key (salt) must be kept secret under the Data Source company (e.g. operator) that generates the anonymized BAU datasets (so end user's privacy is not risked). Once a 3^{rd} party DIS has calculated anonymized personal data insights, re-identifying those insights can be done using for example one of the following alternatives:
- Copying back the anonymized personal data insights dataset calculated at DIS to the BAU dataset Data Source company that knows the anonymization keys and algorithms, so they can safely revert the anonymization. The main drawbacks of this solution are operational costs, scalability and it may implies legal problems.
- Introducing a proxy that reverts the anonymization before doing a query at the DIS datasets. That is, when the data insight supplier wants to revert the anomyzation of any insight data sets (i.e. it wants to know the insight data sets which correspond to a certain end user), he may consult a proxy (belonging to the DS company) and said proxy can perform the reversion of the anomyzation. The main drawbacks of this solution are operational costs, additional complexity, scalability and it may implies legal problems and requires extra data insights encryption.
- Share the anonymization keys and algorithms with either the SP and DIS. But in this case, the end user's privacy cannot be guaranteed.

So existing solutions may have, among others, the following problems:
- They require propagating end user consent to Data Source company, so it can access to the anonymized personal data insight when is copied back to the DS company that has the keys and algorithms to revert the anonymization.
- In case of a proxy solution, they require performing an extra encryption process between the Data Insight Supplier (DIS) and the Service provider (SP), so the proxy would never have access to the personal data insights without explicit end user consent
- They scale very badly: both the proxy or the internal DS company copy process as solutions, have to be repeated for each personal data insight that is calculated by third parties DISs, consuming hardware and communications resources, incurring operational and integration costs every time there is a service provider wanting to use an anonymized dataset and its insights.
- Other solutions like sharing the DS company anonymization keys of algorithm with DIS or SP put a risk end user privacy while the implied operator loses the control of when and who is accessing to the personal datasets of its end users.
- Other solutions rely on explicit end user consent and do not hide user identity

For these reasons, the embodiments of the present invention stated below propose a new solution to improve the reversion of anomyzation for consumer's data and generally speaking to share personal data of consumers, overcoming at least some of these drawbacks of the prior art solutions. This solution is not only applicable in the scenario disclosed above (based on querying anonymized data insights) but in any scenario where a consumer service provider (bank, healtgh institution...) wants to know any information related to a consumer from a Data Source company (telecom operator...) that also has consumer persona data, an there are 3^{rd} parties involved in the personal data transaction flow, without compromising consumer's privacy and optimizing resources consumption.

### SUMMARY OF THE INVENTION

The current invention solves the aforementioned problem by disclosing a scalable solution for accessing consumer's (end user's) data (personal data), anonymizing and reverting anonymized consumer's personal identifiers at transaction time, while guarantying consumer's privacy at transaction time, once the consumer grants her consent. This solution is called Anonymized Data Access Protocol (mechanism), ADAP.

The proposed invention has, among other, the following advantages (these and other advantages will be apparent with the detailed description of the invention):
Increases scalability and adds more flexibility, saving resources: With just one simple server (ADAP server) implementation it is possible to scale to multiple service scenarios. It can revert anonymization of multiple personal data identifiers (mobile, passport number, social security number, ...)
Increased efficiency: With just one server it is possible to serve multiple 3^{rd} parties, both DISs and SPs, at lower operational costs.
Increased Privacy protection: As it will be explained later, by the usage of OneTime Tokens, during the personal data access transaction to annoymized personal data sets. This OneTime token is an ephemeral token that represents the personal consumer identifier (i.e a mobile phone number, passport, national identity number) during the transaction accessing to consumer personal data. A one time token can be used exactly just one time and by limited period of time, during the personal data transaction. Each transaction will have different OneTime Tokens and a OneTime Token can be exchanged by the personal id or its anonymized representation. The proposed solution consist of a intermediary server (ADAP server) controlled by the Data Source an a protocol (ADAP) that generates One Timetokens every time there is personal data transaction. None of the parties involved in the transaction: ADAP Server (usually controlled by Data Source), Data Insights Supplier (DIS) and Service Provider (SP) have never access to more of two of the following Triplet: personal_identifier, anonymized_personal identifier, personal data (insights). ADAP server has only access to personal identifier and anonymized identifier, DIS has access to anonymized identifier and personal data insight, SP has access to personal identifier and personal data insight. So the personal identifier of the consumer together with the personal information associated to said user are never communicated in clear together. This protocol (ADAP) allows distributing consumers personal information to third parties (with the consent of consumer) while keeping consumer's privacy under control.. In other words, the proposed solution personal data access transactions without revealing consumer's identity to third parties which are part of the transaction and which have no consent of the consumer's to know his identity.
Better control and accounting: The proposed solution based on an ADAP protocol server server can trace back all the data access transactions, identifying the service provider and the data insighst supplier that are part of the consumer service transaction.

In a first aspect, it is proposed a method for accessing personal data of an end user (a consumer) of a first service provider (e.g. a telecommunications operator) by a second service provider maintaining the privacy of the consumer, the method comprising the following steps:
a) An electronic server receiving a message from the second service provider (e.g. from a node of the second service provider) requesting a (one time) token, said message including an identifier of the consumer, personal_id (for example, the mobile telephone number of the consumer);
b) The server generating the one time token based on the personal_id received by applying at least an anonymization (e.g. encryption), the anonymization comprises applying an encryption algorithm with a certain key and sending said token to the node of the second service provider;
c) A node (as it will be explained later, this node can be for example the data supplier in a first use scenario and the first service provider in a second use scenario) receiving a message requesting certain personal data of the consumer, said message including the token as identification of the end_user and, when receiving said message, said node sending to the server a message including the token;
d) When receiving the message including the token, if the time lapsed from the generation of the token to the reception of the token is less than a certain threshold, the server reverting in the token at least one of the anonymizations performed when generating the token and sending the result (e.g. the anonymized personal_id in the use scenario 1 and the personal_id in use scenario 2) to the node;
e) The node obtaining certain personal data of the consumer from a database based on the result received from the server and sending said personal data of the consumer to the second Service Provider (directly or through a intermediary node, called aggregator).

Said algorithm and/or said key may be only accessible by the server, i.e. they can only be reverted by the server and not by other nodes involved in this process.

In an embodiment (e.g. use scenario 1), the first service provider anonymizes the data generated for consumers by encrypting the identity of the consumer to which each data set belongs and the first service provider sends said anonymized personal data to a node called Data Insights Supplier (or simpler, Data Supplier) and where:
- In step b), generating the One Time Token comprises: performing a first anonymization (encryption) of the received personal_id of the consumer (the end user), using the same key and algorithm used by the first service provider to encrypt the identity of the consumer, where the result of said first anonymization is an anonymized personal_id of the consumer, and performing a second anonymization to the anonymized personal_id, applying the encryption algorithm with the certain key, only accesible by the server;
- After step b) and previous to step c), the second service provider sends to the Data Supplier a message requesting certain personal data of the consumer, said message including the one time token as identification of the end_user;
- Step c) comprises: the Data Supplier sending the message including the token to the server;
- Step d) comprises: the server reverting the second anonymization obtaining the anonymized personal_id of the consumer and sending said anonymized personal_id to the Data Supplier;
- Step e) comprises: the Data Supplier obtaining, using said received anonymized personal_id, the certain personal data and sending said data to the second service provider.

The certain personal data requested by the second service provider may be data insights information obtained as a result of the Data Supplier processing the personal data generated by the first service provider for the consumer.

In an embodiment (e.g. use scenario 2), the method further comprises:
- In step b) generating the One Time Token comprises: Performing a single anonymization of the received personal_id of the consumer applying the encryption algorithm with the certain key only accesible by the server;
- After step b) and previous to step c), the second service provider sending to a node called Aggregator a message requesting certain personal data of the consumer, said message including the token as identification of the end_user and the Aggregator sending to the first service provider (e.g. a node of the first sevice provider) a message requesting certain personal data of the consumer, said message including the token to the second service provider;
- Step c) comprises: When receiving the message from the Aggregator, the node of the first service provider sending the message including the token to the server;
- Step d) comprises: The server reverting the second anonymization so the personal_id of the consumer is obtained and sending said personal_id to the node of the first service provider;
- Step e) comprises: the node of the first service provider obtaining, using said received personal_id, the certain personal data and sending said data to the first service provider through the Aggregator.

It is also provided a method for accessing personal data of an end user (a consumer) of a first service provider (e.g. a telecommunications operator) by a second service provider maintaining the privacy of the consumer, the method comprising the following steps:
- Periodically or when some predetermined event occurs, the first service provider (e.g. a node of the first service provider) sending a message to an electronic server, requesting a one time token, said message including an identifier of the consumer, personal_id;
- The server generating the one time token based on the personal_id received, by applying at least an anonymization, the anonymization comprises applying an encryption algorithm with a certain key, and sending said token to the node of the first service provider;
- The first service provider sending to a node called Aggregator, a message (including certain personal data of the consumer generated by the first service provider), said message including the token as identification of the end_user and the Aggregator sending a message including the certain personal data of the consumer and the token to the second service provider;
- When receiving the message, the second service provider (e.g. a node of the second service provider) sending a message including the token to the server;
- When receiving said message including the token, if the time lapsed from the generation of the token to the reception of the token is less than a certain threshold, the server reverting the anonymizations performed so the personal_id of the consumer is obtained and sending the personal_id to the second service provider.

Said algorithm and/or said key may be only accessible by the server, i.e. they can only be reverted by the server and not by other nodes involved in this process.

The data of the consumer is information generated the first service provider as a result of the provision of a service to the consumer (that is, data obtained as a result of the first service provider operation/interaction with the consumer to provide a service). For example, if the first service provider is a telecommunications operator, the consumer data may be billing records and/or Call Detail Records and/or Customer Relationship Management Information and/or any information generated by the operator when providing the telecommunication service to the user.

The personal_id may be one of the following: a mobile phone number of the end user (consumer), a National Identity Card Number of the end user, a passport number of the end user or any other identification used to identify the end user in the first service provider (and may be also in the second service provider)..

In an embodiment, the first service provider is a mobile telephony operator the second service provider is a bank and the certain end user personal data is information about roaming of a mobile telephone of the end user in a certain foreign country.

In another aspect, it is proposed an electronic server for accessing personal data of the end user (the consumer) of a first service provider by a second service provider maintaining the privacy of the consumer, the server comprising:
Means for receiving a message from the second service provider requesting a one time token, said message including an identifier of the consumer, personal_id;
Means for generating the one time token based on the personal_id received, by applying at least an anonymization, the anonymization comprising applying an encryption algorithm with a certain key, where said algorithm and/or said key are only accessible by the server and sending said token to the node of the second service provider;

Means for receiving a message, from a node, including the token;
Means for, when receiving said message including the token, if the time lapsed from the generation of the token to the reception of the token is less than a certain threshold, reverting at least one of the anonymizations performed when generating the token and for sending the result to the node, which obtains certain personal data of the consumer from a database based on the result received from the server.

In an embodiment, the node which sends the message including the token to the server is a Data Supplier which receives from the first service provider, anonymized personal data of the consumer and the means for generating the one time token based on the personal_id received comprises means for performing a first anonymization of the received personal_id of the consumer, using the same key and algorithm used by the first service provider to encrypt the identity of the consumer, where the result of said first anonymization is an anonymized personal_id of the consumer, and for performing a second anonymization to the anonymized personal_id, applying the encryption algorithm with the certain key only accessible by the server;

In an embodiment, the node which sends the message including the token to the server is a node of the first or second service provider and the means for generating the one time token based on the personal_id received comprises means for performing a single anonymization of the received personal_id of the consumer by applying an encryption algorithm with a certain key where said algorithm and/or said key are only accessible by the server.

In another aspect, it is proposed a system for accessing personal data of an end user (consumer) of a first service provider by a second service provider maintaining the privacy of the consumer, the system comprising:
- An electronic server comprising:
   Means for receiving a message from the second service provider requesting a one time token, said message including an identifier of the consumer, personal_id;
   Means for generating the one time token based on the personal_id received, by applying at least an anonymization, the anonymization comprising applying an encryption algorithm with a certain key, where said algorithm and/or said key are only accesible by the server and for sending said token to the node of the second service provider;
   Means for receiving from a node (in the data supplier or in the first service provider) a message including the token;
   Means for, when receiving said message including the token, if the time lapsed from the generation of the token to the reception of the token is less than a certain threshold, the server reverting at least one of the anonymizations performed when generating the token and for sending the result to the node;

The node comprising:
- Means for receiving a message requesting certain personal data of the consumer, said message including the token as identification of the end_user
- Means for, when receiving the result of the reversion of the anonymization from the server, obtaining certain personal data of the consumer from a database based on the result received from the server and for sending said personal data of the consumer to the first Service Provider.

It is also proposed a system for accessing personal data of an consumer of a first service provider by a second service provider maintaining the privacy of the consumer, the system comprising:
- An electronic server comprising:
- Means for receiving, periodically or when some predetermined event occurs, a message from a node of the first service provider requesting a one time token, said message including an identifier of the consumer, personal_id;
- Means for generating the one time token based on the personal_id received, by applying at least an anonymization, the anonymization comprises applying an encryption algorithm with a certain key when said algorithm and/or said key are only accessible by the server and sending said token to the node of the second service provider and sending said token to the first service provider;
- Means for receiving a message including the token from a node of the second server provider and for, if the time lapsed from the generation of the token to the reception of the token is less than a certain threshold, the server reverting the anonymizations performed so the personal_id of the consumer is obtained and sending the personal_id to the second service provider;

A node of the first service provider comprising:
- Means for sending to a node called Aggregator, a message including certain personal data of the consumer generated by the first service provider, said message including the token as identification of the end_user

An aggregator comprising:
- Means for, when it receives a message from the first service provider including certain personal data of the consumer and the token, sending said message to the second service provider.

The node of the second service provider comprising:
- Means for, when it receives a message from the Aggregator including certain personal data of the consumer and the token, sending a message including the token to the server.

Finally, in another aspect of the present invention, a computer program is disclosed, comprising computer program code means adapted to perform the steps of the described method when said program is run on a computer, a digital signal processor, a field-programmable gate array, an application-specific integrated circuit, a micro-processor, a micro-controller, or any other form of programmable hardware and a digital data storage medium is also provided encoding a machine-executable program of instructions to perform any of the methods disclosed. Preferred options and particular embodiments disclosed for the communication histories merging method can also be applied to the communication histories merging apparatus and computer program.

### BRIEF DESCRIPTION OF THE DRAWINGS

For the purpose of aiding the understanding of the characteristics of the invention, according to a preferred practical embodiment thereof and in order to complement this description, the following figures are attached as an integral part thereof, having an illustrative and non-limiting character:
Figure 1 schematically shows a communication scenario where the proposed solution is applied according to an embodiment of the invention.
Figure 2 schematically shows the message flow in a first use scenario (ADAP in Real Time Querying Anonymized Personal Data Sets) according to an embodiment of the invention.
Figure 3 presents the message flow in an spedific example (inquiring Credit Scoring using phone number as personal identifier) of the first use scenario according to an embodiment of the invention in which ADAP is implemented over HTTP REST JSON.
Figure 4 schematically shows the message flow in a second use scenario (ADAP in Real Time Anonymized Pull Transaction) according to an embodiment of the invention.
Figure 5 schematically shows the message flow in a third use scenario (ADAP in Real Time Anonymized Push Transaction) according to an embodiment of the invention.
Figure 6 is a block diagram of the logic architecture of an ADAP server (using HTTPS REST JSON) according to an embodiment of the invention.

### DETAILED DESCRIPTION OF THE INVENTION

The present invention proposes an application layer mechanism (or in other words, and application layer protocol) for anonymizing and reverting anonymized personal at transaction time, called Anonymized Data Access Protocol, ADAP.

The proposed invention allows accessing (or sharing) data belonging to (corresponding to) a certain end user (also known as consumer) without sending in clear personal identification of the consumer to any 3^{rd} party involved in the data transaction, and keeping the identification of the consumer only visible at the entities that have acquired consumer consent. In a possible use scenario, said consumer's personal data has been anonymized (that is, the consumer's identity to which each data set belongs to, is hidden, for example encrypted) and shared to 3^{rd} party that process consumer personal data to generate insights that remain anonymized. As a consequence of the anonymization, any other entity requesting (after obtaining consumer's consent to use his personal identifier) access to said anonymized personal insight data set does not know which data belongs to the certain consumer, so the anonymization must be reverted (in other words, the consumer's identity to which each data set belongs to, must be de-hidden, for example decrypted). By using ADAP, this personal data anonynimization reversion is made at transaction time guarantying consumer's privacy, scalability and efficiency (saving communications and hardware resources). The consumer's data to be obtained, may be, for example, insights (e.g.added value data) extracted from end consumer's personal data related to the his business as usual operation within a certain company (Data Source). For example, the consumer's data generated when the consumer is using telecommunications services of a telecommunications operator (e.g. as a mobile telephone operator or an internet services operator) through a electronic device (for example, a laptop, PC, mobile phone, smart phone, tablet or any other electronic device). In this case, the data will be for example identified by the consumer's phone number, then it will be first anonymized and then released to a 3^{rd} party which extracts personal data insights associated to consumers (i.e credit scoring), that a service provider, like a Bank, can use later to offer credit services to the same consumer identified by his phone number

In another use case scenario, an entity (e.g. another service provider) after obtaining consuming consent, requests information of a certain end user from an operator. In particular, in this use case scenario, the service provider may requests consumer information from a set of Data Sources companies that are aggregated by a functional entity called Aggregator. This is the case, for example, when a credit or debit card of an consumer is used in a foreign country outside the consumer's home country. In order to know whether it is a fraud operation, the service provider (the bank to which the card belongs to) may want to query the telecommunications operator to know if said consumer's is using his phone (roaming) in said foreign country (if the consumer's phone is in the foreign country, it is an indication that the consumer is in the foreign country and therefore, the card operation is not a fraud). Since the Aggregator does not have the right to known consumer identity, said query must be propagated to the Aggregator without using the identity of the consumer in the clear, so the consumer's privacy is kept. This is allowed by the proposed mechanism.

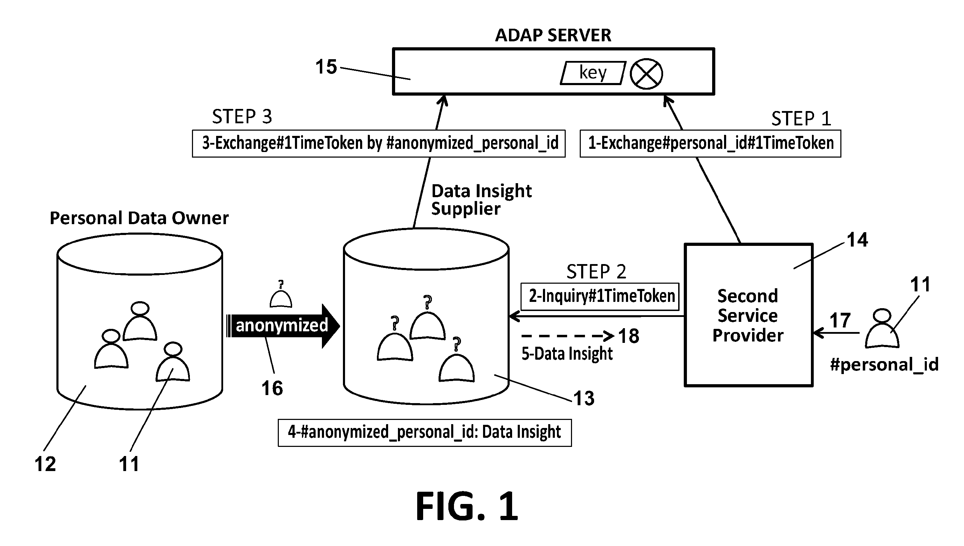

According to an embodiment of the invention, the proposed mechanism (called ADAP) is based on exchanging OneTime Tokens between the nodes (entities) involved, in three main steps. Figure 1 schematically shows an exemplary scenario where the present solution is applied.

The entities (roles) involved in the proposed mechanism will be:
- End User (11) also called consumer (in this text, the terms consumer and end user are going to be indistinctly used with the same meaning): A person that receives services associated to its personal identifiers by one or more service providers. These services can be for example telecommunication services provided by a telecommunication operator to which the end user's is subscribed or other type of services provided by another service providers based, for example in the added value personal information (also called data insight).
- Data Source (DS) also called first service provider, personal data owner or operator (12): The entity (e.g a telecommunications operator) that has personal data associated to End Users. It typically generates personal end user's information (data sets) as a result of the (BAU) activities the operator is performing for the end user (when providing a certain service as for example a telecommunications service). This personal information generated by the Operator includes an identifier of the end user said personal information belongs to. The Data Source may anonymize the personal datasets of the end users it manages (that is, it hides the identity of the end user to which each personal data set belongs) and share (16) said anonymized data sets with Data Insights Suppliers because either it does not have the legal right or the expertise to extract personal data insights using end user's personal data. This operator may be a telecommunication operators, for example, a mobile telecommunications company, with obtain personal data sets (CDRs, CRM, billing information...) or any other end user's information generated as a result of the telecommunications services provided by the operator to the end user. It knows the personal identification of the end user.
- Data Insights Supplier (DIS) (13) (also simpler called Data Supplier): The entity that extracts (anonymized) valued added personal information (also called data insights) by processing (performing calculations) anonymized personal datasets received from the Data Source. Data insights remain anonynimized (that is, the supplier does not know to which end user corresponds each data insights). This entity can work for different operators and can have end user's personal information coming from different Data Sources or Operators. It does not know the personal identification of the end user.
- Aggregator: In some use scenarios, the Service Provider does not want any Data Insights but only some end user's information directly from the operator (data source) and usually there is more than one operator. In these and other cases, when there is more than one first operator (data source), there is an entity called aggregator which acts as an intermediate node between the service provider and the multiple operators. It can be said that it is a particular type of DIS. In an embodiment, the same entity acts as Data Insights Supplier and as aggregator depending on the use scenario. It does not know the personal identification of the end user.
- Second service provider (SP) (14): The entity that offers other services (for example, value added services) to the end user based on end user's information (or end user's personal data insights) obtained as a result of the operation of the first service provider. The SP uses the end user's information (from the Data Source usually via an aggregator) or the added value personal information (data insights) generated by the Data Insight Supplier, to offer a certain service to the end user. It typically provides the front end to obtain end user's consent to use its personal identifier to access to the information. For example, the second service provider may be a bank offering a credit to the end user and the data insights used by the bank is the Credit Score of the end user obtained for the end user's billing information. The Second service provider receives a Service Request (requesting a certain service) from the end user, identified by his personal_id (for example, personal telephone number, DNI...).
- ADAP Server (15): The entity executing the ADAP solution. That is, it makes possible anonymizing and reversing anonymization at transaction time and accessing to personal datasets in a scalable and safer manner. The same ADAP Server can be used for several operators (first service providers) and/or for several second service providers. ADAP allows that the second service provider accesses the insights (from DIS) or the personal data (from the DS via the aggregator) without the DIS or the aggregator knowing the personal ID of the end user. As well, the second service provider does not know the anonymized personal ID of the end user and the DS does not know the insights.

The first (operator) and second service providers, data insight supplier (or aggregator) and ADAP server may be remotely located and communicates through one or several telecommunications networks. In an embodiment, some of said entities can belong to the same company and can be collocated. For example, the ADAP server may belong to the operator. ADAP does enforce (does not need) neither a specific communications nor wiring format nor a specific transport, so any communications format or transport can be used. The (logical) messages used in this protocol can be implemented over different transports protocols (HTTPS, TCP, UDP or any other) and using different data formats (JSON, XML, Binary, Protocol buffers or any other).

In the first use scenario (querying anonymized personal data sets, for example personal data insights), the three main steps of the proposed solution are (it is supposed that previous to this steps, the end user or consumer (11) has requested (17) a service to the second service provider and that the consumer has given his consent to the SP use his data and its personal_id):
Step-1: This step is a transaction time anonymization. The Second service provider exchanges via the ADAP Server an end user personal identifier (consumer personal identifier), personal _id, (for example, its mobile phone number or any other type of consumer personal identifier) by a One Time Token, that is a password of only one use. The One Time Token is obtained by the ADAP Server making a double anonymization.
   Firstly, the personal_id of the en user is anonymized (e.g. encrypted) using the same algorithm and same key, used by the operator to anonymize the consumer's personal data. This way the anonymized personal_id will be obtained.
   Secondly, the anonymized personal_id is anonymized (encrypted) using another second anoymization algorithm and/or key (e.g. encryption key), which is only known (accessible) by the ADAP server (that is, it is neither acessible by the Operator, by the DIS or by the SP, or in other words, the server is the only entity which can access to this algorithm and keys used in the second anoymization), so only the ADAP server can revert this second anonymization. This way, the One Time Token is obtained.
Step-2: The second Service Provider inquiries the Data Insights Supplier anonymized personal dataset (data insights, in the example of figure 1, the credit score of said consumer) using the same OneTimeToken, as primary personal data identifier in the query.
Step-3: The Data Insights Supplier upon request, sends to the ADAP server the received OneTimeToken and receives from the ADAP server the personal identifier anonymized counterpart or representation. As explained before, to generate the token the ADAP server anonymizes the Consumer Personal Identifier using the same process used by the Data Source to anonymize the consumer personal information sent to the Data Insight Supplier. That is, the ADAP server uses the same key and algorithm to transform the Consumer personal identifier (personal_id) in its anonymized counterpart or representation (anonymized_personal_id) that was used originally by the Data Source to release personal data to the Data Insights Supplier. For example, if the anonymization consist on encrypting the consumer's personal data identifier with a certain key, this representation will be the encrypted version of the consumer personal identifier using the same encryption and the same certain key. To generate the One Time Token, the ADAP server will apply a second anonynmization (encryption) to said anonymized_personal_id. When the server receives the token from the DIS, it will revert said second anonymization, so it will obtain the user's personal identifier anonymized representation (anonymized_personal_id), anonymized using the same process used by the Data Source, and it will sent it to the DIS. Afterwards, using said representation of the consumer personal identifier, the DIS query its data base to obtain the data insights corresponding to said consumer and answers back (18) with said obtained data insights to the inquire performed at step 2.

In other use scenarios (as the second and third use scenarios explained later), other steps will be performed.

ADAP allows guarantying consumer privacy, while keeping under control of the anonymization owner (the ADAP server provider that may be the operator) the access to anonymized personal datasets.

The use of One Time Tokens have the following properties: It can be used just one time at each protocol step; it varies at each transaction from step-1 (that is, if the second service provider wants to request another consumer's information, another one time token must be used) and it lasts for a limited period of time (configurable by the ADAP server provider). These properties, in combination with the 3 previous steps, guarantee that any of the participants (Data Source, Data Insights Supplier, Second service provider, ADAP server) has never concurrent access to more than two of the following 3 parameter, guaranteeing therefore the consumer's privacy:
- Personal identifier in clear
- Anonymized counterpart of the personal identifier (representation)
- Result of the query performed on the anonymized dataset

The main messages of the ADAP protocol in the three use scenarios explained, will be the following:

| **Logical Message** | **From/To** | **Description** | | |
|---|---|---|---|---|
| **Exchange IDByOneTimeToken (Step 1)** | 2^{nd}SP/ Operator - ADAP Server | Exchange personal_id (of the end user) by a OneTimeToken | | |
| 2^{nd} SP (Scenarios 1 and 2) /Operator (Scenario 3) | | | **Parameter** | **Description** |
| | | **Request** | Personal_Identifier | Personal identifier of the End User |
| | | | ServiceCode (Scenario 1) | This service code is provisioned by the ADAP server to the SP (or the Operator) previous to any transaction. It is an alphanumeric code which identifies the association between the Second service provider, Data Insights Supplier and Anonymization key &algorithm (or operator). |
| | | | | In other words, it identifies the Anonymization key &algorithm that the ADAP Server has to use for the first anonymization. |
| | | **Response** | One Time Token | Generated by ADAP Server from the personal_id of the user (with one or two anoymizations). Contains properties that enforce the temporality and ephemeral nature |
| **QueryPersonalDataSet (Step 2)** | SP-DIS (Aggregator) | Query DIS anonymized personal data set using OneTimeToken as identifier | | |
| This message is only used in the scenarios 1 and 2 | | | **Parameter** | **Description** |
| | | **Request** | One Time Token | OneTimeToken generated by the ADAP Server |
| | | **Response** | Results | Result of the query |
| **ExchangeOneTimeToke nByReprese ntation (Step 3)** | DIS-ADAP Server | Exchange OneTime Token by its anonymized personal id counterpart (representation), that it uses to query its anonymized personal data set. | | |
| This message is used in the first use scenario and some times in the third use scenario. | | | **Parameter** | **Description** |
| | | **Request** | One Time Token | OneTimeToken represents end user personal identifier |
| | | **Response** | Representation | The anonymized personal id of the End User |
| **ExchangeOneTimeToke nByID** | DS (or Second service provider) to ADAP Server | Exchange OneTimeToken by its personal id counterpart. | | |
| **This message is only** used in the second and third use scenario. | | | **Parameter** | **Description** |
| | | **Request** | Token | OneTimeTo ken correspondi ng to end user personal identifier |
| | | **Response** | Personal_Identifier | Personal identifier of the End User |
| **ExchangeOneTimeToke nBySourceU RL** | DIS to ADAP Server | Exchange OneTimeToken by the URL of the DataSource | | |
| This message is used in the second and third use scenario. | | | **Parameter** | **Description** |
| | | **Request** | Token | OneTimeToken corresponding to end user personal identifier |
| | | **Response** | URL | URL of the Data Source |
| **ExchangeOneTimeToke nByDestinationURL** | DIS to ADAP Server | Exchange OneTimeToken by the URL of the (second) service provider | | |
| This message is only used in the second and third use scenario. | | | **Parameter** | **Description** |
| | | **Request** | Token | OneTimeToken corresponding to end user personal identifier |
| | | **Response** | URL | URL of the Service Provider that is destination for the Data |

Now, as an example, three exemplary use scenarios are going to be explained (even the proposed mechanism can be used in many different use scenarios). And, of course, these scenarios may be total or partially combined and any other scenario which is a partial or total combination of said use scenarios is also covered by the present invention.

Said scenarios are:
1. Querying anoymized personal datasets of an end user (for example, anonymized personal data insights).
2. Pulling personal data of an end user.
3. Pushing personal data of an end user,

Scenario 1 is about services based on DIS anonymized personal data insights. Scenario 2 and 3 are about sharing personal data or data insights through a DIS that may act as intermediary aggregator (usually of multiple DSs).

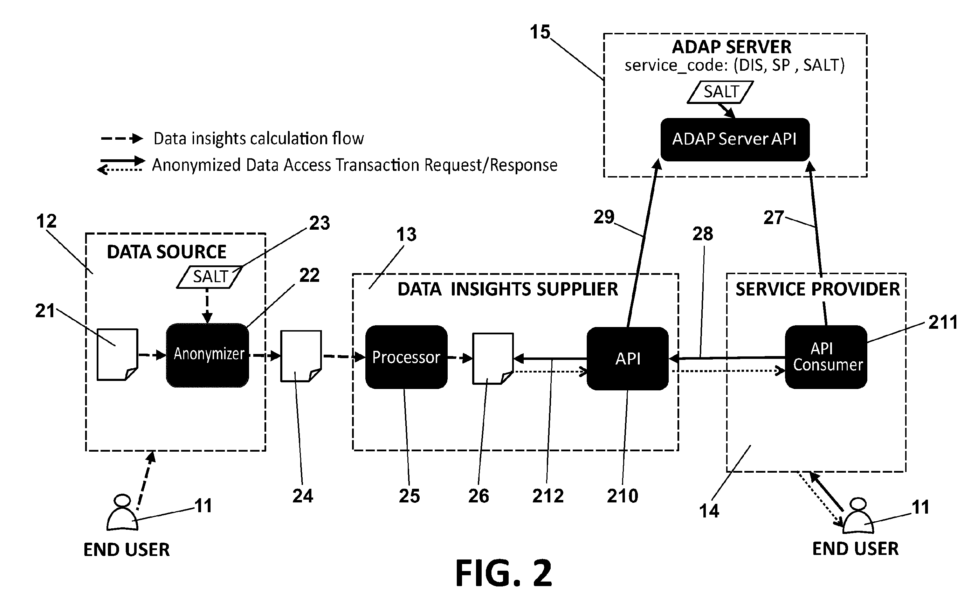

Figures 2, 4 and 5 shows the ADAP messages flow in detail for an ADAP implementation for scenarios 1, 2 and 3 respectively. They also contain a brief description of how the anonymized personal dataset is typically generated. In these cases, the ADAP protocol is implemented over HTTPS (Hyper Text Transfer Protocol Secure) REST (Representational State Transfer) and JSON (JavaScript Object Notation) interfaces, but this is only an example, other protocols and interfaces can be used.

### Scenario 1 - Querying anonymized personal datasets

In this scenario, the operator (or Data Source) (12), for example a telecommunications operator (like a mobile communications operator using any technology as GSM, UMTS, LTE...) generates personal data sets of the end user (consumer) (11) as a result as its usual operation with the end user (for example billing records, calls detail records...). This data (21) when it is generated and stored by the operator is not anonymized (that is, is "raw" data with the personal ID of the end user in the clear). This personal ID can be any ID which identifies the end user in the operator (for example, the mobile phone number of the user, the National Identity Card Number, the passport number, the MSIDSN...); the personal_id to use will be usually agreed prior to any transaction by DS, SP and DIS. Figure 2 schematically shows the message flow in this use scenario according to an embodiment of the invention.

The data (21) is anonymized (22) using a certain algorithm (e.g. an encryption algorithm) and key (23), so the personal identification of the user (personal_id) is anonymized (it is not in the clear but it is for example encrypted), called anonymized_personal_id, and then it is shared (24) with a DIS (13) (that is, it is sent to the DIS entity through a communications network using any communications technology). This entity (DIS) can store the personal data sets as they are without processing them but usually the DIS process (25) said received personal data sets obtaining value added data insights (26), that remain anonymized. Then the DIS stores the personal data sets of each end user (or the data insights obtained from said personal data set) associated not to the personal_id of said end user but to the anonymized version of said personal_id (anonymized_personal_id).

In figure 2, the proposed mechanism is implemented as an application (or more specifically, an application programming interface, API, which is a set of routines protocols, and tools for building software applications) which is used by the Second service provider (14), that is, the Second service provider is the API consumer (211). This mechanism may be implemented using for example an HTTPS protocol.

In this scenario, the end user (11) requests a certain service to the Second service provider (14). In order to provide said service, the SP needs some personal data information or some personal data insights of the end user (the SP has the consent of the user to get said personal data). When the end user requests the service (or after the Second service provider sends a message to the end user asking for it), he provides the Personal_id of the user to the Second service provider in the clear (without encryption).

As stated before, the first step is that the SP sends a ExchangeIDByOneTimeToken message (27) to the ADAP server (15) (through a communications network using any communications technology) to request the One Time Token. This request message (for example, a POST message) includes the personal_id of the user, and the service code. This service code is an alphanumeric string provisioned by the ADAP server to the SP (or the Operator) previous to any transaction to identify the association between the Second service provider, Data Insights Supplier and Anonymization key &algorithm, so knowing the Service Code, the ADAP server can obtain the Anonymization key &algorithm to use, the DIS and the SP (the ADAP server needs to have pre-provisioned the same key and algorithms used by the Operator for anonymizing the personal data of each end user). With this information, the ADAP Server generates the One Time Token. The ADAP Server generates the One Time Token in such a way that the ADAP server is later able to know to which end user's ID the token corresponds. In one embodiment, the ADAP server performs a first anonymization (using same key and algorithms used to anonymized the personal_id by the operator) to obtain the anoymized personal_id and a second anonymization (which is only accessible the server and, therefore it can only be reverted by the ADAP server). Once the One Time Token is generated, the ADAP Server sends it to the SP. This One Time Token will have a limited duration, that is, if the One Time Token is received by the ADAP server passed a certain time threshold from his generation, said One Time Token will be considered as invalid by the server.

Once the Second service provider receives the token, it sends (28) a message (for example a GET message) to the Data Insights Supplier (or more specifically to the application or API (210) of the DIS which implements the proposed mechanism) requesting to the Data Insights Supplier certain anonymized personal dataset (i.e. data insights). Said message includes the token and optionally an indication of the type of personal information the Second service provider requests. The content and format of this message can be agreed between the Second service provider and the DIS and are not restricted by the proposed protocol, as long as the previously generated OneTimeToken is used as primary identifier (for doing the query in the anonymized dataset, after passing by the ADAP server which will obtain the anonymized personal_id from this OneTimeToken). In other words, the interaction between SP and DIS can have any suitable form adapted to the service scenario.

After receiving the request from the SP, the DIS sends (29) a message (for example a ExchangeOneTimeTokenByRepresentation message) to the ADAP Server (through a communications network using any communications technology) requesting the personal identifier counterpart or representation (anonymized_personal_id) corresponding to said token. In order to do that, the ADAP server reverts the second anonymization he has performed to obtain the One Time Token, obtaining therefore the anonymized_personal_id. Then it will send said anonymized_personal_id to the DIS. Afterwards, using said representation of the end user personal identifier, the DIS queries (212) its data base (26) to obtain the data insights corresponding to said end user and answers back to the SP with said obtained data insights.

As stated before, the One Time Token will have a limited duration, so when the ADAP Server receives the message with the token, it will check the "age" of the token (that is, the time interval lapsed from his generation) and if said "age" is higher than a certain time threshold, said One Time Token will be considered invalid and the ADAP server will not send the requested anonymized_personal_id to the DIS (optionally, it will send to the DIS an error message).

Access to the ADAP server is usually restricted to only specific DIS, SP and DS entities, which can be identified for example by their origin IP address (if the server receives a message from a not allowed entity, it will not reply to the message or it will reply with an error indication) and it is possible to trace back the usage of the data set (different known AAA mechanisms can be used for that). Typically the ADAP server is controlled and managed by the Operator.

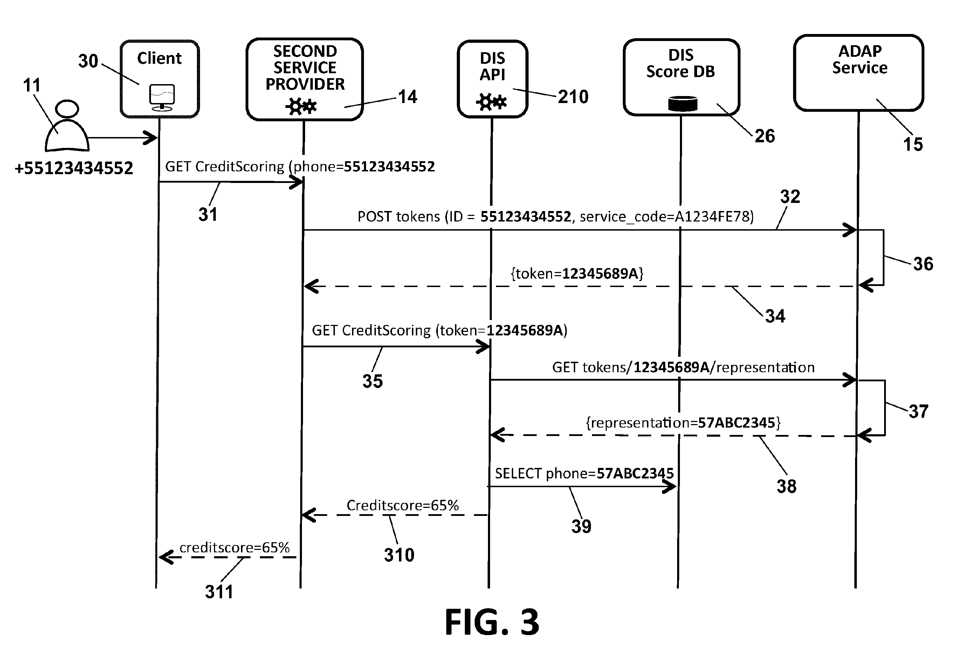

Now the flow message in an specific example will be explained using figure 3. Figure 3 presents the message flow in an specific example (inquiring Credit Scoring using phone number as personal identifier) of the first use scenario according to an embodiment of the invention in which ADAP is implemented over HTTP REST JSON.

First, the user (11) using an electronic device (30) (for example, a laptop, PC, mobile phone, smart phone, tablet or any other electronic device) requests a certain service to the Second service provider. In this request (31), it will be included the end user personal_id, in this case, his mobile phone number (+55123434552). Then, the SP will send a message (32) to the ADAP Server (15) including the end user's personal_id and the service code corresponding to this type of transaction. Then the ADAP server will generate (33) the token corresponding to this personal_id and this service code (that is, it will perform a first anonymization using the same algorigthm and key used by the operator and then a second anonymization using an algorigthm and key only known by the ADAP server). Then it will send the token back (34) to the SP.

Then the SP sends (35) a message to the DIS (210), requesting certain personal dataset (in this case the credit scoring) and including the token. The DIS will send a message (36) to the ADAP Server including the token. The server will map the token to the anonymized_personal_id (37) (that is, it will revert the second anonymization made to the token) and it will send (38) the anonymized_personal_id, back to the DIS. Then, the DIS will obtain (39) from the database (26) the data insights corresponding to said anonymized_personal_id. In this case, the data insights will be the credit score of end user (11) that will have a value of 65%. Then, the DIS will send (310) the credit score to the SP and optionally, the SP will send it to the user (311).

### Scenario 2 - Pulling personal data of an end user

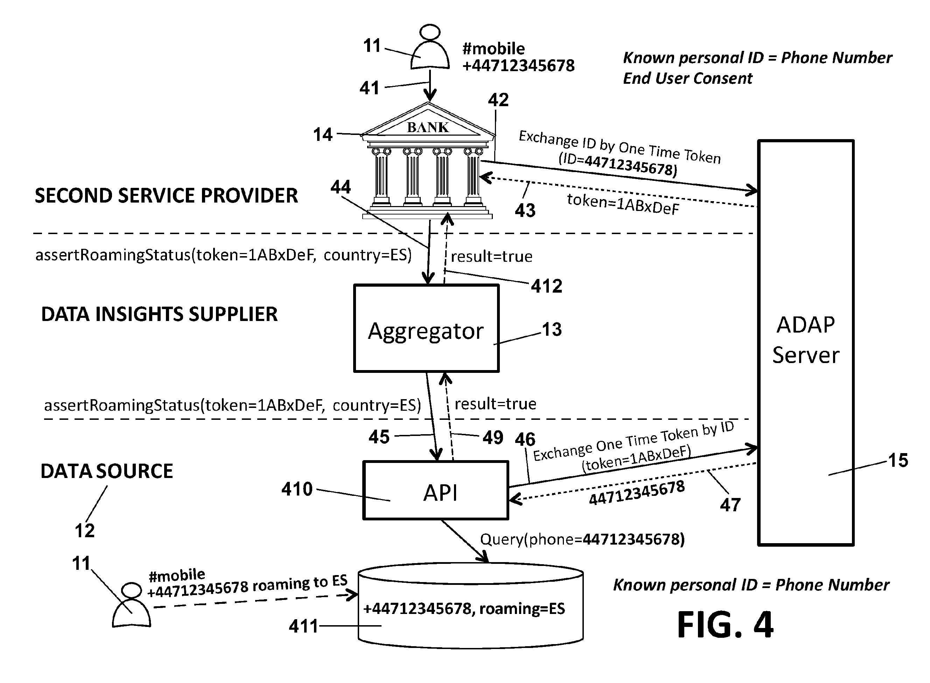

Figure 4 shows the message flow in this scenario according to an embodiment of the invention. In this scenario, (as in the scenario 1) the operator (or Data Source) (12), for example a telecommunications operator (like a mobile communications operator using any technology as GSM, UMTS, LTE...) generates personal data sets of the end user (11) as a result as its usual operation with the end user (for example billing records, calls detail records...). This data when it is generated and stored by the operator usually is not anonymized (that is, is "raw" data with the personal ID of the end user in the clear).

As in scenario 1, the proposed mechanism may be implemented as an application (or more specifically, an application programming interface, API) which is used by the entities as the Second service provider (14), which will be the API consumer.

In this scenario, the end user (11) requests a certain service to the Second service provider (14). In order to provide said service, the SP needs some personal data information of the end user (some of the information generated by the operator as a result as its usual operation with the end user) from the operator. Of course, it has the consent of the user to get said personal data. That is, in use scenarios 2 and 3 the ADAP protocol messages allows implementing Anonymized Real time Pull (and Push) data transactions between SP and DS parties that have end user consent and know the personal_id of the end user, but without sending to each other the personal_id of the end user. The One Time Token can be understood as a real time anonymization at transaction time, that is directly reverted to the original personal_id of the end user (with a ExchangeOneTimeTokenByID message) at the other end of the transaction (DS or SP depending if the transaction is Pull or Push).

This is the case, for example, when a bank entity (the second service provider) detects the use of a bank (credit or debit) card belonging to the user outside of the home country of the user (i.e. in a foreign country). In order to know whether it is a fraud use of the bank card, the bank queries a telecommunications operator (through an aggregator) to know if said end user's is using his phone (roaming) in said foreign country. But said query must be done without using the user's identity. This is only an example and, of course, this use scenario can apply to other type of information and/or second service providers. In the example of figure 4, the home country of the user is UK and he is using the bank credit cards in Spain.

Typically the role of the Data Insigths Supplier in these Pull scenario (and in the Push scenario explained later) is the role of an Aggregator. That is an entity (e.g. a network node) aggregating various Data Sources (Operators) and integrating those with Second service providers. The aggregator acts as an intermediary entity or node between the operator(s) or first service providers and the second Service Provider(s).

In this use scenario, the second service provider receiving the service request from the end user (for example, the second service provider is a bank and the end user is using a credit card of this bank in a foreign country). When the end user requests the service (or after the Second service provider sends a message to the end user asking for it), he provides (41) the Personal_id of the user to the Second service provider in the clear (without encryption or with an encryption that can be reverted by the second service provider). In the example of figure 4, said personal_id is the phone number of the user.

Then the SP sends (42) a Exchange IDByOneTimeTokenmessage to the ADAP server (15) (through a communications network using any communications technology) to request the One Time Token. This request message (for example, a POST message) includes the personal_id of the user. The ADAP Server generates the One Time Token in such a way that the ADAP server is later able to know to which end user's ID the token corresponds). In one embodiment said One Time Token is a single anonymization (whose parameters as algorithm and key, are only accessible by the server and, therefore it can only be reverted by the ADAP server). In another embodiment, in order to generate the One Time Token, the server performs a first anonymization (using same key and algorithms used to anonymized the personal_id by the operator, if any) to obtain the anonymized personal_id and a second anonymization (whose parameters as for example the algorithm and the key used are only accessible by the server and, therefore it can only be reverted by the ADAP server). Once the One Time Token is generated, the ADAP Server sends it to the SP (43).

Once the Second service provider receives the token, it sends (44) a message to the Aggregator requesting certain end user's data. Said message includes the token and optionally an indication of the type of personal information the Second service provider Requests. In this case, it requests a confirmation of the end user is roaming in the foreign country (Spain). The content and format of this message can be agreed between the Second service provider and the DIS, with the only restriction of using the previously generated OneTimeToken as primary identifier for doing the query in the anonymized dataset. In figure 4, this message is an "assert roaming status" message including the token and the roaming country.

After receiving the request from the SP, the Aggregator (13) sends (45) the request message to the corresponding operator (the operator which has the appropriated data to answer the request), through a communications network using any communications technology, requesting the end user's data requested by the SP. This request includes the token and optionally an indication of the type of personal information requested (it can be a copy of the message received from the Second service provider).

The way a specific operator is resolved by the DIS (aggregator) is out of the scope of this document and can be done using any known procedure. In one embodiment, the message can include a Service Code and with said service code, the Aggregator can obtain (for example through a database) the address of the Operator. Or for example, in another embodiment, even the message received by the Aggregator can include the identifier or the address of the operator, where the Aggregator must send the message. In another embodiment, for example, if there are multiple data sources (operators) or multiple data insights supplier (aggregator), there can be a previous step of negotiation between the data sources, data insights suppliers and the ADAP server. In said previous step, it is established for each consumer's personal_id which is the address or ID of the Data Source (for example, the URL of the Data Source) and/or the address or ID of the data insights supplier, which should be contacted to resolve the requests for said personal_id. So, in one embodiment, upon One Time Token Request, the ADAP server answers to the Service Provider not only with the corresponding token but also with the address or ID of the Data Source (operator) and /or Data Insights Supplier (or Aggregator) which should be contacted (in this embodiment, it can be said that the ADAP server also performs the task of a sort of DNS server, based on personal_id instead on of URL names).

In another embodiment, after receiving the request from the SP, the DIS/Aggregator (13) sends an ExchangeOneTimeTokenBySourceURL message to the ADAP server and the ADAP server answers to the Aggregator with the address (the URL) of the Data Source which should be contacted by the Aggregator.

After receiving the request from the Aggregator, the operator (or more specifically, the application implementing the proposed mechanism in the operator (410)) sends (46) a message (a ExchangeOneTimeTokenByID message) to the ADAP server requesting the personal_id of the end user. The message includes the token.

When it receives the message, the ADAP server obtains the personal_id which corresponds to said token (or in other words, it maps the token to the personal_id). In an embodiment, in order to do that, the ADAP server reverts the anonymization he has performed to obtain the One Time Token, obtaining therefore the personal_id. Then it will send (47) said personal_id to the operator.

In an embodiment, if the server has made two anonymizations (a first and a second anonymization as stated before), the server must revert both anonymizations to obtain the personal_id. Or, alternatively, the server may revert only the second anonymization and send the anonymized personal_id (the personal_id with the first anonymization) to the operator (in this case the operator must be able to obtain the end user's requested information from the anonymized personal_id).

The One Time Token may have a limited duration, so when the ADAP Server receives the message with the One Time Token, it will check the "age" of the token (that is, the time interval lapsed from his generation) and if said "age" is higher than a certain time threshold, said One Time Token will be considered invalid and the ADAP server will not send the requested personal_id (optionally, it will send to the operator an error message).

Afterwards, using the personal_id of the end user sent by the ADAP server, the operator queries its data base (411) to obtain the end user's personal data requested. In the case of figure 4, the operator will check in the corresponding data base of the operator, if said end user (using its mobile phone number that is his personal_id) is roaming in Spain. And the result of said checking is sent back (49) to the aggregator and from the aggregator (49) to the second service provider.

### Scenario 3 - Pushing personal data of an end user

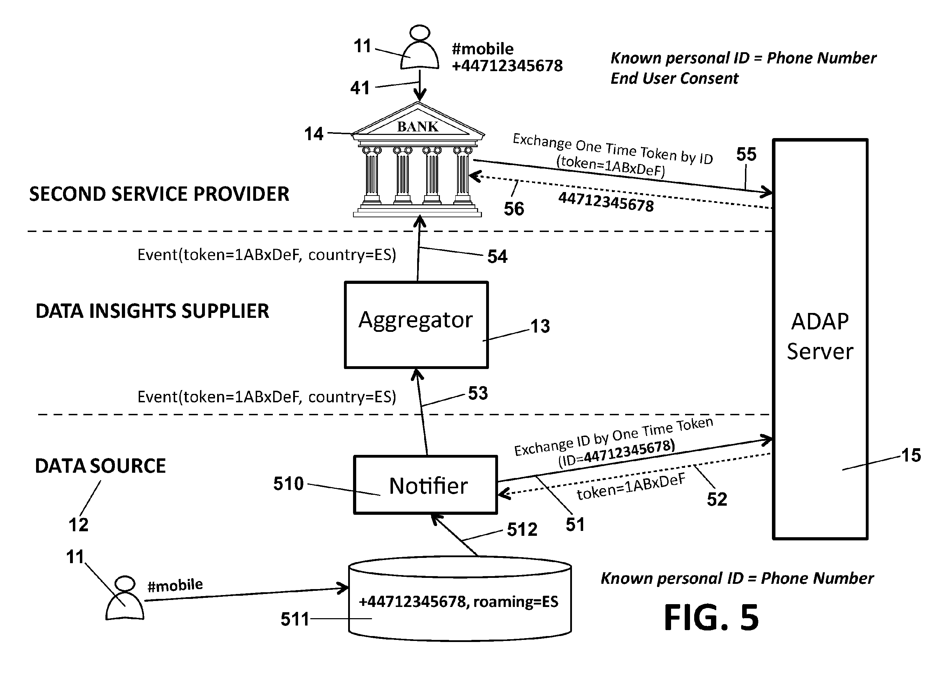

Figure 5 shows the message flow in this scenario according to an embodiment of the invention. In this scenario, (as in the scenarios 1 and 2) the operator (or Data Source) (12), for example a telecommunications operator (like a mobile communications operator using any technology as GSM, UMTS, LTE...) generates personal data sets of the end user (11) as a result as its usual operation with the end user (for example billing records, calls detail records...). The proposed mechanism may be implemented as an application (or more specifically, an API).

In this scenario, an entity called Notifier (510), sends some personal data information of the end user (11) (some of the information generated by the operator as a result as its usual operation with the end user) to a Second service provider (14). Of course, the Second service provider has the consent of the end user to get said personal data. This information will be used by the Second service provider to provide a certain service to the user. This information will be sent periodically and/or according to some conditions previously agreed between the Second service provider and the Notifier (for example, when the information changes or when some predetermined event occurs). The Notifier usually is a functional entity belonging to the first service provider (operator), i.e. the Notifier is located in an Operator Node. In an embodiment, the Notifier does not belong to the Operator but has access to the information generated by the Operator.

This is the case, for example, when a bank entity (the second service provider) wants to be notified if the end user is roaming in a certain foreign country (out of the home country of the end user). If the bank detects the use of a bank (credit or debit) card belonging to the user outside in said foreign country, the fact that the user is roaming in said country is an indication that said use of the bank card is not a fraud use. So if the bank is notified that the user is roaming in said country, the bank will not block an end user's bank card when it is used in said foreign country. This is only an example and, of course, this use scenario can apply to other type of information and/or second service providers. In the example of figure 5, the home country of the user is UK and the roaming country is in Spain. Typically the role of the Datalnsigths Supplier in these Push scenario is the role of an Aggregator (13), an entity (e.g. a network node) which as an intermediary between the Operator(s) and the Second service provider(s) and that may aggregate various Data Sources (Operators) and integrate those with Second service providers.

In this use scenario, it is supposed that previously to any transaction the Second service provider has agreed with the Operator to be notified of certain personal data or certain data insights of a certain end user (identified by its personal_id) through a certain DIS/aggregator. This notification may be sent periodically and/or according to some condition. In the example of figure 5, when the Operator detects that the mobile phone of the end user is roaming in Spain, it notifies of said roaming state to the Second service provider through the aggregator. Usually this is done not only for a single user but for all the users of the second service providers (in this case, all the bank users).

When the Notifier sends end user's personal data to the Second service provider, it cannot add to the information to be sent the personal_id of the end user, but somehow the Second service provider must be also notified to which end user the personal data belongs. That is, if the second service provider is notified that an user is roaming in Spain but the SP does not know which user said notification refers to, said roaming information is useless. In the example of figure 5, said personal_id is the phone number of the user (but any other identification of the end user can be used).

According to the proposed invention, when the Notifier wants to send end user's personal data to the Second service provider (for example, because it detects a certain event associated to the end user), the Notifier (510) sends (51) a Exchange IDByOneTimeToken message to the ADAP server (15) (through a communications network using any communications technology) to request the One Time Token

As stated before the Notification to the Second service provider of end user's personal data can happen periodically (in this case the Notifier will request periodically end user's personal data to an operator data base (511) or because it is notified (512) by a database of the Operator (511) that certain event has happened (in the case of figure 5, it is notified that said end user is roaming in Spain).

The ExchangeldByOneTimeToken message includes the personal_id of the user. The ADAP Server generates the One Time Token in such a way that the ADAP server is later able to know to which end user's ID the token corresponds). In one embodiment said One Time Token is single anonymization (whose parameters as algorithm and key, are only accessible by the server and, therefore it can only be reverted by the ADAP server). In another embodiment, in order to generate the One Time Token, the server performs a first anonymization (using same key and algorithms used to anonymized the personal_id by the operator, if any) to obtain the anonymized personal_id and a second anonymization (only known by the server, and, therefore it can only be reverted by the ADAP server). Once the One Time Token is generated, the ADAP Server sends it (52) to the Notifier.

Once the Notifier receives the token, it sends (53) a message to the Aggregator notifying certain end user's data. Said message also include the token and optionally an indication of the type of personal information reported. In figure 5, this message is an "event" message including the token and the event (e.g. the end user is roaming in a foreign country (Spain)).

After receiving the notification from the Notifier, the Aggregator (13) sends (54) to the corresponding second service provider (through a communications network using any communications technology) notifying the end user's data. This notification includes the token and optionally an indication of the type of personal information notified (it can be a copy of the message received from the Operator). The content and format of these messages (53, 54) can be agreed between the second service provider, the Operator and the Aggregator, with the only restriction of using the previously generated OneTimeToken as primary identifier.

In an embodiment, the information to be sent to the second service provider may be data insights of the end user, stored in the DIS/Aggregator. In said case, after receiving the notification from the data source that some event has happened, the DIS sends a message (for example a ExchangeOneTimeTokenByRepresentation message) to the ADAP Server (through a communications network using any communications technology) requesting the personal identifier counterpart or representation (anonymized_personal_id) corresponding to said token. In order to do that, the ADAP server may revert the second anonymization he has performed to obtain the One Time Token, obtaining therefore the anonymized_personal_id. Then it will send said anonymized_personal_id to the DIS. Afterwards, using said representation of the end user personal identifier, the DIS queries its data base to obtain the data insights corresponding to said end user and sends to the second service provider with said obtained data insights.

The way a specific second service provider is resolved by the aggregator is out of the scope of this document and can be done using any known procedure. In one embodiment, the message can include a Service Code and with said service code, the Aggregator can obtain (for example through a database) the address of the second service provider. Or for example, in another embodiment, the message received by the Aggregator can include the identifier or the address of the second service provider, where the Aggregator must send the message. In another embodiment, for example, if there are multiple possible second service providers, there can be a previous step of negotiation between entities involved. In said previous step, it is established for each consumer's personal_id which is the address or ID of the second service provider (for example, the URL), which should be contacted to resolve the notifications for said personal_id. So, upon One Time Token Request, the ADAP server answers to the DS not only with the corresponding token but also with the address or ID of the second service provider which should be contacted (in this embodiment, it can be said that the ADAP server also performs the task of a sort of DNS server, based on personal_id instead on of URL names).

Or, after receiving the notification (53) from the Data Source, the DIS/Aggregator (13) sends an ExchangeOneTimeTokenByDestinationURL message to the ADAP server and the ADAP server answers to the Aggregator with the address (the URL) of the Second Service Provider which should be contacted by the DIS/Aggregator for this transaction.

After receiving the message from the Aggregator, the second service provider (or more specifically, the application implementing the proposed mechanism in the Second service provider) sends (55) a message (a ExchangeOneTimeTokenByID message) to the ADAP server requesting the personal_id of the end user. The message includes the token. When receiving the message, the ADAP server obtains the personal_id which corresponds to said token (or in other words, maps the token to the personal_id). In an embodiment, in order to do that, the ADAP server reverts the anonymization he has performed to obtain the One Time Token, obtaining therefore the personal_id. Then it will send (56) said personal_id to the operator.

In an embodiment, if the server has made two anonymizations (a first and a second anonymization as stated before), the server must revert both anonymizations to obtain the personal_id.

The One Time Token may have a limited duration, so when the ADAP Server receives the message with the One Time Token, it will check the "age" of the token (that is, the time interval lapsed from his generation) and if said "age" is higher than a certain time threshold, said One Time Token will be considered invalid and the ADAP server will not send the requested personal_id (optionally, it will send to the operator an error message).

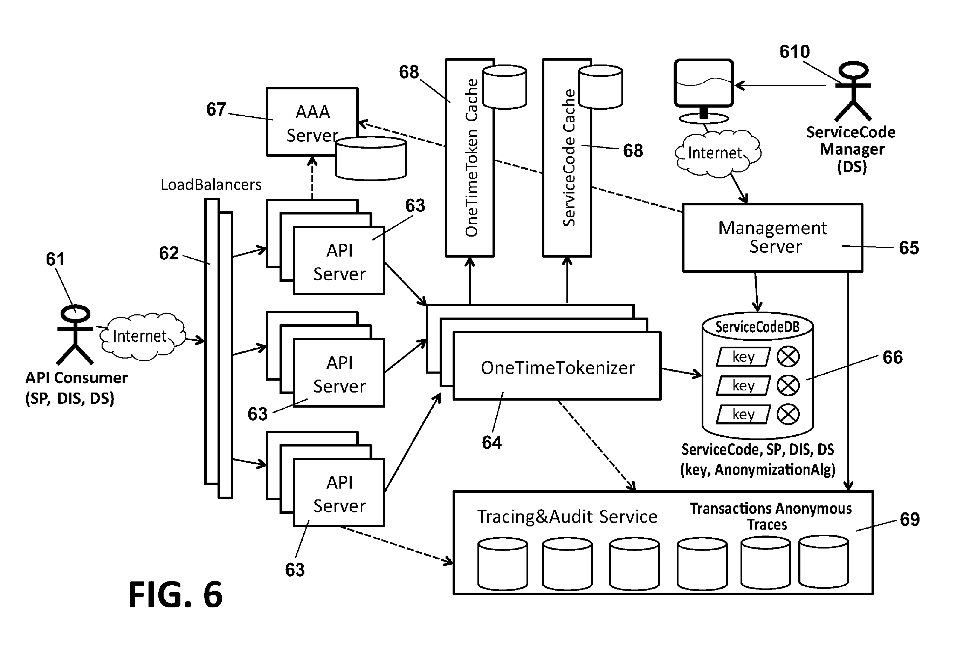

There are multiples ways of implementing and ADAP server. Figure 6 describes the logical architecture of an ADAP Server. In the example of figure 6, the ADP server may be implemented using HTTPS REST JSON interfaces that can be self-provisioned by a Data Source administrator. JSON (JavaScript Object Notation) is a lightweight data-interchange format which is easy for humans to read and write and easy for machines to parse and generate. It is based on a subset of the JavaScript Programming Language, Standard ECMA-262 3rd Edition - December 1999. Of course, this is only an implementation example, and other protocols and formats can be used.

The ADAP server will serve several API consumers (61) (that is, the entities which use the application (API) implemented by the ADAP server, for example, through a communications network and/or internet). Said consumers can be service providers, the data source or operator and the Data Insights Supplier or Aggregator (depending on the specific use scenario). In figure 6, ADAP Server is implemented as a central node, but it is possible also to have a distributed implementation of the server deployed in multiple nodes.

One single ADAP server can serve many different consumers (different second service providers, operators or DIS) of different systems. In order to be able to do that, the server can have several sub-servers (called API servers (63)) each one serving a group of consumer. It can have also a load balancer (62) to distribute the consumers which are served by each API server at each moment, depending on the load of the API servers.

The central element of the server is OneTimeTokenizer (64). This module is in charge of generating and controlling OneTimeTokens. Each ADAP server must select its own way of generating OneTimeToken as long as they fulfill the following properties: They can be used just 1 time at each protocol step; vary at each transaction and last for a limited period of time (configurable).

There are different ways of fulfilling those properties. ADAP Server implementation over HTTP REST JSON may use for example JSON Web Tokens (JWT). JSON Web Tokens are an open, industry standard RFC 7519 method for representing claims securely between two parties. Claims are a set of key/value pairs that provide a target system with sufficient information about the given client to apply the appropriate level of access control to resources under its ownership. Further details about claims can be found in section 4 of the JWT specification.

As stated before, in order to generate the token, the ADAP server may perform a first anonymization which uses the same key and algorithm used by the operator to anonymize the end users' personal data. In order to identify which key and algorithm the ADAP server has to use for generating the token for an specific transaction, the ADAP server use a service code which identifies the association between the Second service provider, Data Insights Supplier and Anonymization key &algorithm (or operator). This service code is provisioned by the operator (610) (for example, in an entity called Service Code Manager) to the ADAP sever previous to any transaction. The server receives it (for example, using a functional entity called Management server (65)) and stores in a database (66). In this database, the server stores the key and algorithm associated to each service code, so when the server receives a Exchange IDByOneTimeToken message including a certain service code, it can obtain the key &algorithm he has to use for the first anonymization (encryption).

In order to protect end user privacy accesses to the ADAP Server may be authenticated and authorized (67) by any mean (api-key , api-secret credentials, certificates...) and communications (e.g from/to the ADAP server) may be encrypted. In order to improve the response of the server, extensive data caching is recommended (68), for example, in a cache memory for the Service Code and in a cache memory for the Token. All data transactions steps in the protocol may be traced (69) (e.g. using anonymized identifier) for later reporting (for example in Tracing and Audit functional entity).

As stated before ADAP protocol does not enforce any particular technical implementation. An embodiment for data sharing and access over internet is to use HTTPS REST JSON with JWT (JSON Web Tokens) standards but, of course, this is only an implementation example, and other protocols and formats can be used, for example, It is possible to use other transports like TCP, UDP and wiring formats, like XML, Protocol Buffer, Binary...

As long as the main basic parameters (previously disclosed in this text) are included, ADAP messages can be extended with multiple parameters, values and data structures depending on the service scenario and/or other factors. For instance it would be possible to include the endpoint of the DataSource as part of the ADAP Server response, or other parameters.

The different entities involved in the proposed mechanism (SP, DIS, ADAP server, DS, end user's electronic device...) may communicate using the same or different communications technologies and/or communications networks and any communications technology and/or communications network can be used (wifi, mobile communications technology, GSM, 3G, LTE or any other). Even some of them (for example, the server and the DS) can be co-located.

The matters defined in this description are provided to assist in a comprehensive understanding of the invention. Accordingly, those of ordinary skill in the art will recognize that variation changes and modifications of the embodiments described herein can be made without departing from the scope of the invention. Note that in this text, the term "comprises" and its derivations (such as "comprising", etc.) should not be understood in an excluding sense, that is, these terms should not be interpreted as excluding the possibility that what is described and defined may include further elements, steps, etc. Also note that the steps of the method of the invention can be performed by processing means and by computer programs integrated in the data staging area of the database, or in an independent module connected to the data staging area. A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. Some preferred embodiments of the invention are described in the dependent claims which are included below. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method of accessing personal data of a consumer (11) of a first service provider (12) by a second service provider (14) maintaining the privacy of the consumer, the method comprising the following steps:
a) An electronic server (15) receiving a message from the second service provider requesting a one time token, said message including an identifier of the consumer, personal_id;
b) The server generating the one time token based on the personal_id received by applying at least an anonymization, the anonymization comprises applying an encryption algorithm with a certain key, where said algorithm and/or said key are only accessible by the server, and sending said token to the second service provider;
c) A node receiving a message requesting certain personal data of the consumer, said message including the token as identification of the consumer and, when receiving said message, said node sending to the server a message including the token;
d) When receiving the message including the token, if the time lapsed from the generation of the token to the reception of the token is less than a certain threshold, the server reverting in the token at least one of the anonymizations performed when generating the token and sending the result to the node;
e) The node obtaining certain personal data of the consumer from a database based on the result received from the server and sending said personal data of the consumer to the second Service Provider.

2. Method according to claim 1 where the first service provider anonymizes the data generated for consumers by encrypting the identity of the consumer to which each data set belongs and the first service provider sends said anonymized personal data to a node called Data Insights Supplier and where:
- In step b), generating the One Time Token comprises: performing a first anonymization of the received personal_id of the consumer, using the same key and algorithm used by the first service provider to encrypt the identity of the consumer, where the result of said first anonymization is an anonymized personal_id of the consumer, and performing a second anonymization to the anonymized personal_id, applying the encryption algorithm with the certain key, only accesible by the server;
- After step b) and previous to step c), the second service provider sends to the Data Insights Supplier a message requesting certain personal data of the consumer, said message including the token as identification of the consumer;
- Step c) comprises: the Data Insights Supplier sending the message including the token to the server;
- Step d) comprises: the server reverting the second anonymization obtaining the anonymized personal_id of the consumer and sending said anonymized personal_id to the Data Insights Supplier;
- Step e) comprises: the Data Insights Supplier obtaining, using said received anonymized personal_id, the certain personal data and sending said data to the second service provider.

3. Method according to claim 2, where said certain personal data requested by the second service provider is data insight information obtained as a result of the Data Insights Supplier processing the personal data generated by the first service provider for the consumer.

4. Method according to claim 1 where:
- In step b) generating the One Time Token comprises: Performing a single anonymization of the received personal_id of the consumer applying the encryption algorithm with the certain key only accessible by the server;
- After step b) and previous to step c), the second service provider sending to a node called Aggregator a message requesting certain personal data of the consumer, said message including the token as identification of the consumer and the Aggregator sending to the first service provider a message requesting certain personal data of the consumer, said message including the token to the second service provider;
- Step c) comprises: When receiving the message from the Aggregator, a node of the first service provider sending the message including the token to the server;
- Step d) comprises: The server reverting the second anonymization so the personal_id of the consumer is obtained and sending said personal_id to the node of the first service provider;
- Step e) comprises: the node of the first service provider obtaining, using said received personal_id, the certain personal data and sending said data to the second service provider through the aggregator.

5. Method according to any of the previous claims where the personal data of the consumer is information generated the first service provider as a result of the provision of a service to the consumer.

6. Method according to any of the previous claims where the first service provider is a telecommunications operator and the consumer data are billing records and/or Call Detail Records and/or Customer Relationship Management Information and/or any information generated by the operator when providing the telecommunication service to the consumer.

7. Method according to any of the previous claims where the personal_id is one of the following: a mobile phone number of the consumer, a National Identity Card Number of the consumer, a passport number of the consumer or any other identification used to identify the consumer in the first service provider.

8. Method according to any of the previous claims where the first service provider is a mobile telephony operator the second service provider is a bank and the certain consumer personal data is information about roaming of a mobile telephone of the consumer in a certain foreign country.

9. Method of accessing personal data of a consumer (11) of a first service provider (12) by a second service provider (14) maintaining the privacy of the consumer (11), the method comprising the following steps:
- Periodically or when some predetermined event occurs, the first service provider sending a message to an electronic server, requesting a one time token, said message including an identifier of the consumer, personal_id;
- The server generating the one time token based on the personal_id received, by applying at least an anonymization, the anonymization comprises applying an encryption algorithm with a certain key where said algorithm and/or said key are only accessible by the server and sending said token to the first service provider;
- The first service provider sending to a node called Aggregator, a message including the token as identification of the consumer and the Aggregator sending a message including certain personal data of the consumer and the token to the second service provider;
- When receiving the message, the second service provider sending a message including the token to the server;
- When receiving said message including the token, if the time lapsed from the generation of the token to the reception of the token is less than a certain threshold, the server reverting the anonymizations performed so the personal_id of the consumer is obtained, and sending the personal_id to the second service provider.

10. Method according to claim 9 where the first service provider is a mobile telephony operator, the second service provider is a bank and the certain consumer personal data is information about the roaming of a mobile telephone of the consumer in a certain foreign country.

11. System for accessing personal data of a consumer (11) of a first service provider (12) by a second service provider (14) maintaining the privacy of the consumer, the system comprising:
- An electronic server comprising:
Means for receiving a message from the second service provider requesting a one time token, said message including an identifier of the consumer, personal_id;
Means for generating the one time token based on the personal_id received, by applying at least an anonymization, the anonymization comprising applying an encryption algorithm with a certain key, where said algorithm and/or said key are only accessible by the server and for sending said token to the second service provider;
Means for receiving from a node a message including the token;
Means for, when receiving said message including the token, if the time lapsed from the generation of the token to the reception of the token is less than a certain threshold, the server reverting at least one of the anonymizations performed when generating the token and for sending the result to the node;
The node comprising:
- Means for receiving a message requesting certain personal data of the consumer, said message including the token as identification of the consumer
- Means for, when receiving the result of the reversion of the anonymization from the server, obtaining certain personal data of the consumer from a database based on the result received from the server and for sending said personal data of the consumer to the second Service Provider.

12. Electronic server for accessing personal data of a consumer (11) of a first service provider (12) by a second service provider (14) maintaining the privacy of the consumer, the server comprising:
Means for receiving a message from the second service provider requesting a one time token, said message including an identifier of the consumer, personal_id;
Means for generating the one time token based on the personal_id received, by applying at least an anonymization, the anonymization comprising applying an encryption algorithm with a certain key, where said algorithm and/or said key are only accesible by the server and sending said token to the node of the second service provider;
Means for receiving a message, from a node, including the token;
Means for, when receiving said message including the token, if the time lapsed from the generation of the token to the reception of the token is less than a certain threshold, reverting at least one of the anonymizations performed when generating the token and for sending the result to the node, which obtains certain personal data of the consumer from a database based on the result received from the server.

13. Electronic server according to claim 12 where the node which sends the message including the token to the server is a Data Insights Supplier which receives from the first service provider, anonymized personal data of the consumer and where:
the means for generating the one time token based on the personal_id received comprises means for performing a first anonymization of the received personal_id of the consumer, using the same key and algorithm used by the first service provider to encrypt the identity of the consumer, where the result of said first anonymization is an anonymized personal_id of the consumer, and for performing a second anonymization to the anonymized personal_id, applying the encryption algorithm with the certain key only accessible by the server;

14. Electronic server according to claim 12 where the node which sends the message including the token to the server is a node of the first service provider and where the means for generating the one time token based on the personal_id received comprises means for performing a single anonymization of the received personal_id of the consumer applying an encryption algorithm with a certain key where said algorithm and/or said key are only accessible by the server.

15. A computer program comprising computer program code means adapted to perform the steps of the method according to any claims from 1 to 10 when said program is run on a computer, a digital signal processor, a field-programmable gate array, an application-specific integrated circuit, a micro-processor, a micro-controller, or any other form of programmable hardware.
